# EUROPÄISCHE PATENTANMELDUNG

(11) **EP 1 867 983 A2**
(43) Veröffentlichungstag der Anmeldung: **19.12.2007**
(21) Anmeldenummer: 07011466.5
(22) Anmeldetag: 12.06.2007
(51) Int. Cl.: G01N 30/60

(54) **Mikrotechnologisches Bauteil mit Verschlussstopfen**

(30) Priorität: 15.06.2006 DE 102006028124
(71) Anmelder: SLS Micro Technology GmbH, 21079 Hamburg (DE)
(72) Erfinder: Lehmann, Uwe, 22587 Hamburg (DE)
(74) Vertreter: Birken, Lars

(57) **Zusammenfassung**

Die Erfindung betrifft ein mikrotechnologisches Bauteil, umfassend einen allseits von einer Wandung begrenzten und in einem Substrat oder mehreren miteinander verbunden Substraten ausgebildeten Hohlraum, zumindest einen Kanal, der in den Hohlraum mündet zur Zufuhr oder Abfuhr eines Fluids, ein innerhalb des Hohlraums dauerhaft angeordnetes funktionelles Material, und einen in zumindest einem Substrat ausgebildeten, in den Hohlraum mündenden und im Gebrauchszustand des Bauteils verschlossenen Fertigungshilfskanal zur Zuführung des funktionellen Materials während des Herstellungsvorgangs des Bauteils. Erfindungsgemäß wird diese Bauteil fortgebildet, indem der Fertigungshilfskanal mittels eines Verschlussstopfens verschlossen ist und der Verschlussstopfen aus einem Material besteht, welches einen Wärmeausdehnungskoeffizienten aufweist, der nur geringfügig von dem Wärmeausdehnungskoeffizienten des Materials des Substrats, in dem der Fertigungshilfskanal ausgebildet ist, abweicht.

## Beschreibung

Die Erfindung betrifft ein mikrotechnologisches Bauteil, umfassend
- einen allseits von einer Wandung begrenzten und in einem Substrat oder mehreren miteinander verbunden Substraten ausgebildeten Hohlraum,
- zumindest einen Kanal, der in den Hohlraum mündet zur Zufuhr oder Abfuhr eines Fluids,
- ein innerhalb des Hohlraums dauerhaft angeordnetes funktionelles Material, und
- einen in zumindest einem Substrat ausgebildeten, in den Hohlraum mündenden und im Gebrauchszustand des Bauteils verschlossenen Fertigungshilfskanal zur Zuführung des funktionellen Materials während des Herstellungsvorgangs des Bauteils,

Solche mikrotechnologischen Bauteile finden in einer Vielzahl von Vorrichtungen Anwendung. Insbesondere werden mikrotechnologische Bauteile dieser Art in Analysevorrichtungen eingesetzt. DE 20 2005 011 825.7 beschreibt eine Analysevorrichtung mit einer gepackten Trennsäule, die ein solches mikrotechnologisches Bauteil darstellt, wobei das Adsorbermaterial in der Trennsäule das funktionelle Material darstellt.

Die mikrotechnologische Fertigung von Bauteilen mit Hohlräumen, in denen ein bestimmtes funktionelles Material angeordnet ist, stellt eine fertigungstechnische Besonderheit dar, die in vielerlei Hinsicht problematisch ist. Es ist bekannt, zum Zwecke der Befüllung bereits bei der mikrotechnologischen Fertigung der Substrate einen Fertigungshilfskanal auszubilden, durch den nach Fertigstellung der grundsätzlichen Struktur des Bauteils und folglich der Ausbildung des Hohlraums die Befüllung erfolgen kann. Dieser Hilfskanal muss nach erfolgter Befüllung verschlossen werden, was nach dem Stand der Technik durch einen Klebstoff erreicht wird, der in flüssiger Form in den Fertigungshilfskanal eingebracht wird und nachfolgend aushärtet.

Ein Nachteil dieser Gestaltung liegt jedoch darin, dass das mikrotechnologische Bauteil häufig im späteren Betrieb erheblichen Temperaturänderungen unterworfen ist und hierdurch thermische Spannungen im Bereich des Fertigungshilfskanals erzeugt werden. Durch solche thermischen Spannungen können Beschädigungen des Substratmaterials im Bereich des Fertigungshilfskanals oder des Klebstoffs verursacht werden, die zu Undichtigkeiten und somit zum Funktionsausfalls des mikrotechnologischen Bauteils führen können.

Der Erfindung liegt die Aufgabe zugrunde, eine Technologie bereitzustellen, mit der ein zuverlässiger Verschluss von Hohlräumen in mikrotechnologischen Bauteilen erzielbar ist und die es ermöglicht, dass diese Bauteile unter wechselnder thermischer Belastung zuverlässig eingesetzt werden können.

Diese Aufgabe wird erfindungsgemäß gelöst, indem der Fertigungshilfskanal mittels eines Verschlussstopfens verschlossen ist und der Verschlussstopfen aus einem Material besteht, welches einen Wärmeausdehnungskoeffizienten aufweist, der nur geringfügig von dem Wärmeausdehnungskoeffizienten des Materials des Substrats, in dem der Fertigungshilfskanal ausgebildet ist, abweicht.

Durch die weitestgehend übereinstimmenden Wärmeausdehnungskoeffizienten des Verschlusstopfens und des Substratmaterials wird erreicht, dass sich Verschlussstopfen und Substratmaterial bei Temperaturänderungen in prozentual gleichem Ausmaß ausdehnen bzw. zusammenziehen und auf diese Weise werden in der Grenzfläche zwischen Verschlussstopfen und Fertigungshilfskanal auftretende Pressungen oder Spalten verhindert. Die erfindungsgemäße Technologie ermöglicht einerseits, dass Beschädigungen durch thermische Dehnungen vermieden werden und andererseits, dass aufwendige zusätzliche Maßnahmen zur Abdichtung des Verschlussstopfens, wie beispielsweise eine aufwendige Verklebung oder eine Verklemmung des Verschlussstopfens mittels Presssitz, unterbleiben können, da auch bei großen Temperaturschwankungen keine Spalten zwischen Verschlussstopfen und Fertigungshilfskanal auftreten und somit die Dichtheit des Hohlraums jederzeit gewährleistet ist.

Unter einer geringfügigen Abweichung der Wärmeausdehnungskoeffizienten ist in diesem Zusammenhang eine Abweichung zu verstehen, die lediglich einen solchen Umfang hat, dass bei den im Betrieb des Bauteils auftretenden Temperaturschwankungen eine nur so geringe Spannungserhöhung im Grenzflächenbereich zwischen Verschlussstopfen und Fertigungshilfskanal auftreten, dass nicht mit Beschädigungen des Verschlussstopfens oder des Substratmaterials zu rechnen ist. Typischerweise hängt die zulässige Abweichung der Wärmeausdehnungskoeffizienten von Verschlussstopfen und Fertigungshilfskanal von der zulässigen Zugspannung der beteiligten Materialien und deren Elastizitätsmodul ab. Grundsätzlich ist die zulässige Abweichung um so höher, je niedriger der Elastizitätsmodul der Materialien ist und je höher die zulässige Zugspannung der Materialien ist. Im Allgemeinen kann für Substratmaterialien, die typischerweise für mikrotechnologische Bauteile verwendet werden, beispielsweise Silizium und Glas, von einer zulässigen Abweichung der Wärmeausdehnungskoeffizienten von etwa 10% bis 20% ausgegangen werden.

Es ist insbesondere bevorzugt, wenn der Wärmeausdehnungskoeffizient des Materials des Verschlussstopfens mit dem Wärmeausdehnungskoeffizienten des Materials des Substrats, in dem der Fertigungshilfskanal ausgebildet ist, übereinstimmt. Durch übereinstimmende Wärmeausdehnungskoeffizienten werden thermische Dehnungen in einem relativ zueinander genau gleichen Ausmaß erzielt und somit thermische Spannungen vollständig vermieden. Diese Ausführungsform stellt somit den Idealzustand der erfindungsgemäßen Technologie dar und erübrigt eine Berechnung etwaig auftretender thermischer Spannungen und deren Auswirkungen auf das Substrat bzw. den Verschlussstopfen.

Dabei kann die Übereinstimmung der Wärmeausdehnungskoeffizienten insbesondere erreicht werden, indem der Verschlussstopfen aus dem gleichen Material ausgebildet ist wie das Substrat, in dem der Fertigungshilfskanal ausgebildet ist. Neben der so erzielten Vermeidung thermischer Spannungen wird durch diese Ausführungsform zusätzlich die Befestigung des Verschlussstopfens im Fertigungshilfskanal erleichtert, da für die Fixierung übereinstimmender Materialien aneinander regelmäßig eine Vielzahl besonders zuverlässiger und hochwertiger Verbindungsverfahren verfügbar ist, wie beispielsweise Klebetechnologien mit Klebstoffen, die auf das eine spezifische Material abgestimmt sind und andere Technologien für die Verbindung gleichartiger Stoffe, wie Verschweißung, Lösungsklebung oder dergleichen.

Weiterhin ist es vorteilhaft, wenn der Hohlraum einen Einlassabschnitt, der sich im Strömungsquerschnitt erweitert, einen Funktionsabschnitt, der sich in Strömungsrichtung an den Einlassabschnitt anschließt, und einen Auslassabschnitt, der sich im Strömungsquerschnitt an den Funktionsabschnitt anschließt und im Strömungsquerschnitt verringert, umfasst. Auf diese Weise wird eine besonders strömungsgünstige Form des Hohlraums erreicht und hierdurch Totvolumina vermieden. Der Einlassabschnitt schließt sich dabei in Strömungsrichtung vorzugsweise an eine Einlassöffnung an und der Auslassabschnitt mündet in Strömungsrichtung vorzugsweise in eine Auslassöffnung des Hohlraums. Vorzugsweise liegen Einlassabschnitt, Funktionsabschnitt und Auslassabschnitt hinsichtlich ihrer Durchströmungsrichtung fluchtend zueinander, um Strömungsrichtungsänderungen bei Durchströmung des Hohlraums zu vermeiden. Insbesondere ist es bevorzugt, dass Einlassöffnung, Einlassabschnitt, Funktionsabschnitt, Auslassabschnitt und Auslassöffnung zueinander in Strömungsrichtung fluchtend, liegen.

Dabei ist es weiter bevorzugt, wenn der Einlassabschnitt und/oder Auslassabschnitt von dem Funktionsabschnitt mittels einer Trennstruktur abgetrennt ist, welche für das Fluid durchlässig und für das funktionelle Material undurchlässig ist. Mit dieser Ausführungsform wird erreicht, dass der Einlassabschnitt, der Auslassabschnitt und der Probenanreicherungsabschnitt unabhängig voneinander mit funktionellem Material befüllt werden können. Hierdurch wird insbesondere ermöglicht, im Einlassabschnitt und Auslassabschnitt kein funktionelles Material vorzusehen und hierdurch eine günstige Strömungsausbildung des Fluids in den sich erweiternden bzw. sich verengenden Bereich zu erzielen. Die Trennstruktur kann beispielsweise in Gestalt von Stegen oder einer siebförmigen Struktur ausgebildet sein, deren Stegabstand bzw. Lochdurchmesser kleiner ist als das funktionelle Material bzw. als eine Trägerstruktur, auf der das funktionelle Material aufgetragen ist.

Insbesondere ist es dabei bevorzugt, wenn nur im Funktionsabschnitt funktionelles Material angeordnet ist. Durch diese Ausführungsform ist eine homogene Beströmung des funktionellen Materials gewährleistet, wodurch eine Verschleppung der adsorbierten und desorbierten Proben erheblich reduziert werden kann.

Insbesondere ist es bevorzugt, wenn sich der Fertigungshilfskanal senkrecht zur Durchströmungsrichtung des Hohlraums erstreckt. Diese Ausgestaltung ist einerseits fertigungstechnisch für die Herstellung der Substrate vorteilhaft und ermöglicht andererseits eine leichte und zuverlässige Befüllung des Hohlraums mit funktionellem Material. Insbesondere kann mit dieser Anordnung die Ausführungsform mit Einlassabschnitt, Funktionsabschnitt und Auslassabschnitt besonders vorteilhaft ausgeführt werden, da der Funktionsabschnitt durch den günstig angeordneten Fertigungshilfskanal gut befüllt werden kann.

Eine weiterführende Ausführungsform umfasst mehrere separierte Funktionsbereiche mit unterschiedlichen funktionellen Materialien, welche in Durchströmungsrichtung in Serie liegend angeordnet sind und zwischen denen eine Trennstruktur bereitgestellt ist, welche für das Fluid durchlässig und für die funktionellen Materialien undurchlässig ist. Auf diese Weise können in den einzelnen, voneinander getrennten Funktionsbereichen verschiedenartige Adsorbermaterialien mit unterschiedlichen funktionalen Eigenschaften geometrisch getrennt angeboten werden. Mit derartigen Ausführungsformen können Proben mit verschiedenen Adsorbtionseigenschaften geometrisch getrennt adsorbiert werden, ohne dass sie sich gegenseitig beeinflussen.

Weiterhin ist es bevorzugt, wenn mehrere separierte Funktionsbereiche mit unterschiedlichen funktionellen Materialien bereitgestellt werden, welche in Durchströmungsrichtung parallel liegend angeordnet sind und zwischen denen eine Trennstruktur bereitgestellt ist, welche für die funktionellen Materialien und vorzugsweise auch für das Fluid undurchlässig ist. In diese separierten Funktionsbereiche kann das Fluid entweder aus einem gemeinsamen Zufuhrkanal eingeleitet werden, der sich innerhalb des Bauteils verzweigt, oder aber aus mehreren Zufuhrkanälen, die bereits vorab durch Verzweigung aus einem gemeinsamen Zufuhrkanal das Fluid erhalten haben.

Weiterhin ist es besonders bevorzugt, wenn sich der Fertigungshilfskanal von außen nach innen zum Hohlraum hin konisch verjüngt und der Verschlussstopfen kongruent hierzu ausgeformt ist und klemmend und/oder mittels eines Klebstoffes in dem Fertigungshilfskanal befestigt ist. Auf diese Weise wird einerseits eine besonders günstige Befüllbarkeit durch den Fertigungshilfskanal ermöglicht, indem dieser etwa trichterförmig gestaltet ist und zudem eine abdichtende Verklemmung des Verschlussstopfens in dem Fertigungshilfskanal erzielt. Eine zusätzliche Sicherung des Verschlussstopfens mittels Klebstoff verhindert ein Lösen desselben innerhalb des Fertigungshilfskanals und die geringe Schichtdicke des Klebstoffs ist hinsichtlich thermischer Dehnungen bzw. Spannungen in der Regel unkritisch.

Alternativ zu der vorstehend beschriebenen Ausführungsform des Verschlussstopfens kann es gemäß eines zweiten Aspekts der Erfindung in bestimmten Anwendungen bevorzugt sein, wenn sich der Fertigungshilfskanal von innen nach außen konisch verjüngt. Auf diese Weise wird der Verschlussstopfen durch einen im Inneren des Hohlraums herrschenden Überdruck in seinen Sitz gepresst und eine mit dem Innendruck ansteigende Dichtwirkung erzielt.

Weiterhin ist es bevorzugt, wenn der Verschlussstopfen aus einem aushärtbaren Material besteht, welches in einem formbaren oder fließfähigen Zustand in den Fertigungshilfskanal eingeführt werden kann und hierauffolgend ausgehärtet werden kann. Auf diese Weise ist jede geometrische Kontur des Fertigungshilfskanals mit einem Verschlussstopfen verschließbar, da sich das flüssige bzw. formbare Material an die Kontur des Verschlusskanals anpasst und in der solcherart angepassten Weise aushärtet.

Das erfindungsgemäße Bauteil wird vorzugsweise nach einem Verfahren zum Herstellen eines mikrotechnologischen Bauteils, mit den aufeinanderfolgenden Schritten
- Ausbilden eines allseits von einer Wandung begrenzten Hohlraum in einem Substrat oder mehreren miteinander verbunden Substraten,
- Ausbilden zumindest eines Kanals, der in den Hohlraum mündet zur Zufuhr oder Abfuhr eines Fluids,
- Einführen eines funktionellen Materials in den Hohlraum durch einen in dem Substrat ausgebildeten, in den Hohlraum mündenden Fertigungshilfskanal, und
- Verschließen des Fertigungshilfskanals,
wobei der Fertigungshilfskanal mittels eines Materials verschlossen wird, welches einen Wärmeausdehnungskoeffizienten aufweist, der nur geringfügig von dem Wärmeausdehnungskoeffizienten des Materials des Substrats, in dem der Fertigungshilfskanal ausgebildet ist, abweicht.

Dabei ist es insbesondere bevorzugt, wenn der Fertigungshilfskanal mittels eines Materials verschlossen wird, welches einen Wärmeausdehnungskoeffizienten aufweist, der identisch ist zu dem Wärmeausdehnungskoeffizienten des Materials des Substrats, in dem der Fertigungshilfskanal ausgebildet ist.

Weiterhin ist es bevorzugt, wenn der Fertigungshilfskanal mittels eines Verschlussstopfens aus einem festen Material verschlossen wird, welcher reibschlüssig und/oder stoffschlüssig im Fertigungshilfskanal befestigt wird.

Weiterhin ist es bevorzugt, wenn der Fertigungshilfskanal verschlossen wird, indem ein im Hohlraum angeordneter Verschlusstopfen von innen in den Fertigungshilfskanal eingeführt wird.

Schließlich ist es bevorzugt, wenn der Fertigungshilfskanal verschlossen wird, indem ein flüssiges Material in den Fertigungshilfskanal eingeführt und darin ausgehärtet wird.

Eine bevorzugte Ausführungsform wird anhand der anhängenden Figuren beschrieben. Es zeigen:
- Fig. 1a:: Eine längsgeschnittene Seitenansicht eine erfindungsgemäßen mikrotechnologischen Bauteils,
- Fig. 1b:: Eine entlang der Linie A-A in Fig. 1 a längsgeschnittene Draufsicht auf das Bauteil gemäß Fig. 1,
- Fig. 1c:: Eine entlang der Linie B-B in Fig. 1a quergeschnittene Frontalansicht des Bauteils gemäß Fig. 1,
- Fig. 2:: Eine quergeschnittene Frontalansicht gemäß Fig. 3 einer zweiten Ausführungsform des erfindungsgemäßen Bauteils,
- Fig. 3:: Eine quergeschnittene Frontalansicht gemäß Fig. 3 einer dritten Ausführungsform des erfindungsgemäßen Bauteils,
- Fig. 4:: Eine längsgeschnittene Draufsicht einer vierten Ausführungsform des mikrotechnologischen Bauteils gemäß der Erfindung in Form einer Trennsäule,
- Fig. 5:: Eine längsgeschnittene Draufsicht einer fünften Ausführungsform des mikrotechnologischen Bauteils gemäß der Erfindung in Form einer Trennsäule,
- Fig. 6a:: Eine quergeschnittene Frontalansicht einer sechsten Ausführungsform des mikrotechnologischen Bauteils gemäß der Erfindung in Form einer Probenanreicherungskammer,
- Fig. 6b:: Eine entlang der Linie A-A in Fig. 6a längsgeschnittene Draufsicht auf das Bauteil gemäß Fig. 6a,
- Fig. 7a:: Eine quergeschnittene Frontalansicht einer siebten Ausführungsform des mikrotechnologischen Bauteils gemäß der Erfindung in Form einer Probenanreicherungskammer,
- Fig. 7b:: Eine entlang der Linie A-A in Fig. 7a längsgeschnittene Draufsicht auf das Bauteil gemäß Fig. 6a,
- Fig. 8a:: Eine gemäß Fig. 7b längsgeschnittene Draufsicht einer achten Ausführungsform des mikrotechnologischen Bauteils gemäß der Erfindung in Form einer Probenanreicherungskammer, und
- Fig. 8b:: Eine Draufsicht auf das Bauteil gemäß Fig. 8a.

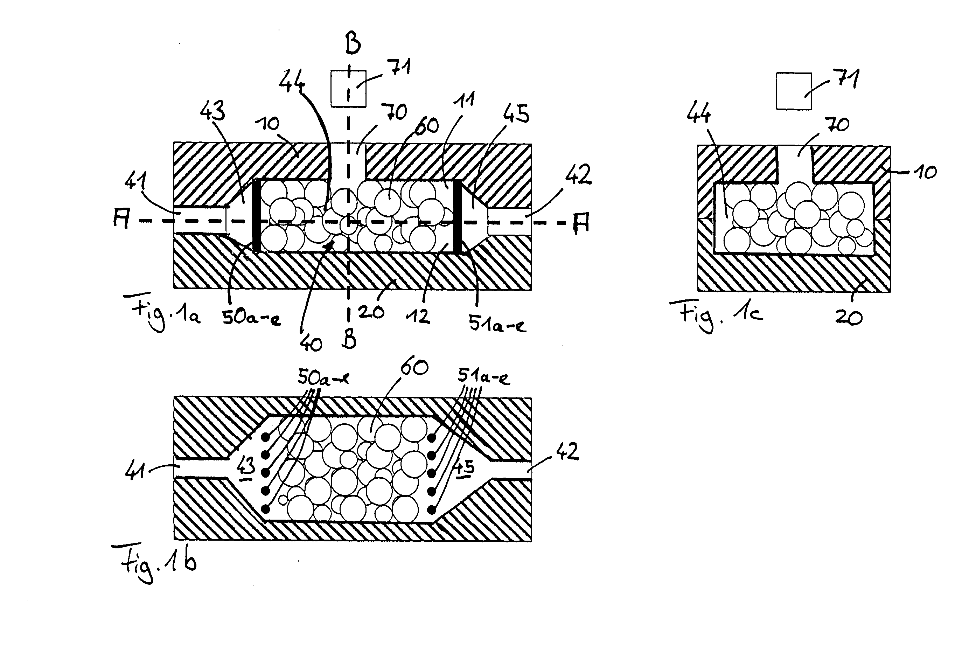

Fig. 1 a-c zeigen eine mikrotechnologische Probenanreicherungskammer, die aus einem ersten Substrat 10 und einem zweiten Substrat 20 zusammengesetzt ist. Die beiden Substrate 10,20 sind entlang einer Grenzfläche 30 aufeinander gebondet.

In beide Substrate 10,20 ist eine wannenförmige Vertiefung 11,21 geätzt, die in der zusammengesetzten Anordnung der beiden Substrate 10,20 einen Hohlraum 40 ergibt.

Der Hohlraum 40 ist durch eine Einlassöffnung 41 und eine Auslassöffnung 42 mit der Außenseite verbunden und durch die Einlassöffnung 41 und Auslassöffnung 42 kann ein Gas den Hohlraum 40 durchströmen.

Der Hohlraum 40 umfasst einen in Strömungsrichtung hinter der Einlassöffnung 41 angeordneten Einlassabschnitt 43, einen in Strömungsrichtung dahinter angeordneten Funktionsabschnitt 44 und einen vom Funktionsabschnitt zur Auslassöffnung 42 führenden Auslassabschnitt 45. Der Einlassabschnitt 43 und der Funktionsabschnitt 44 sind durch mehrere Stege 50a,b,c,... voneinander unterteilt und der Funktionsabschnitt 44 und der Auslassabschnitt 45 sind durch mehrere in gleicher Weise ausgebildete Stege 51a,b,c,... voneinander unterteilt.

Die Stege 50a,b,c,... und die Stege 51a,b,c,... sind voneinander solcherart beabstandet und so bemessen, dass ein Trägermaterial 60, welches dazu dient, ein Adsorbens aufzunehmen und welches in dem Funktionsabschnitt angeordnet ist, nicht zwischen den Stegen 50a,b,c,...,51a,b,c,... hindurch passieren kann und folglich nicht vom Funktionsabschnitt in den Einlassabschnitt oder Auslassabschnitt des Hohlraums 40 gelangen kann.

Der Hohlraum 40 ist des weiteren mittels eines Fertigungshilfskanals 70 mit der Außenseite des Substrats verbunden. Der Fertigungshilfskanal 70 ist im Substrat 10 ausgebildet und erstreckt sich senkrecht zur Längserstreckung des Hohlraums 40. Der Fertigungshilfskanal 70 weist einen größeren Durchschnittsquerschnitt auf als die Einlas- und Auslassöffnung. Er ist in einer zentralen Position zum Hohlraum angeordnet und dient dazu, das feste, in Partikelform vorliegende Trägermaterial 60 mit dem daran anhaftenden Adsorbens in den Funktionsabschnitt 44 des Hohlraums 40 einzubringen.

Der Fertigungshilfskanal kann nach erfolgtem Einbringen des Trägermaterials 60 mit einem Verschlussstopfen 71 verschlossen werden. Der Verschlusstopfen 71 besteht aus dem gleichen Material wie das Substrat 10 und ist geometrisch kongruent zum Fertigungshilfskanal 70. Der Verschlussstopfen 71 ist so bemessen, dass er in dem Fertigungshilfskanal 70 klemmt.

Fig. 2 zeigt eine alternative Ausführungsform der Probensammelkammer gemäß Fig. 1 a-c. Die alternative Ausführungsform stimmt im Wesentlichen mit der in den Fig. 1 a-c gezeigten Probensammelkammer überein, jedoch weicht der Fertigungshilfskanal 170 von dem dort gezeigten Fertigungshilfskanal 70 ab.

Der Fertigungshilfskanal 170 der in Fig. 2 gezeigten Ausführungsform ist konisch von außen nach innen verjüngt und der Verschlussstopfen 171 für die in Fig. 2 gezeigte Ausführungsform ist dementsprechend ebenfalls konisch verjüngt und geometrisch kongruent zu dem Fertigungshilfskanal 170 ausgeformt. Die in Fig. 2 gezeigte Ausführungsform weist den Vorteil auf, dass der Verschlussstopfen 171 nicht versehentlich zu weit in den Hohlraum 40 vorgeschoben werden kann, da er eine definierte Einpresstiefe bereitstellt.

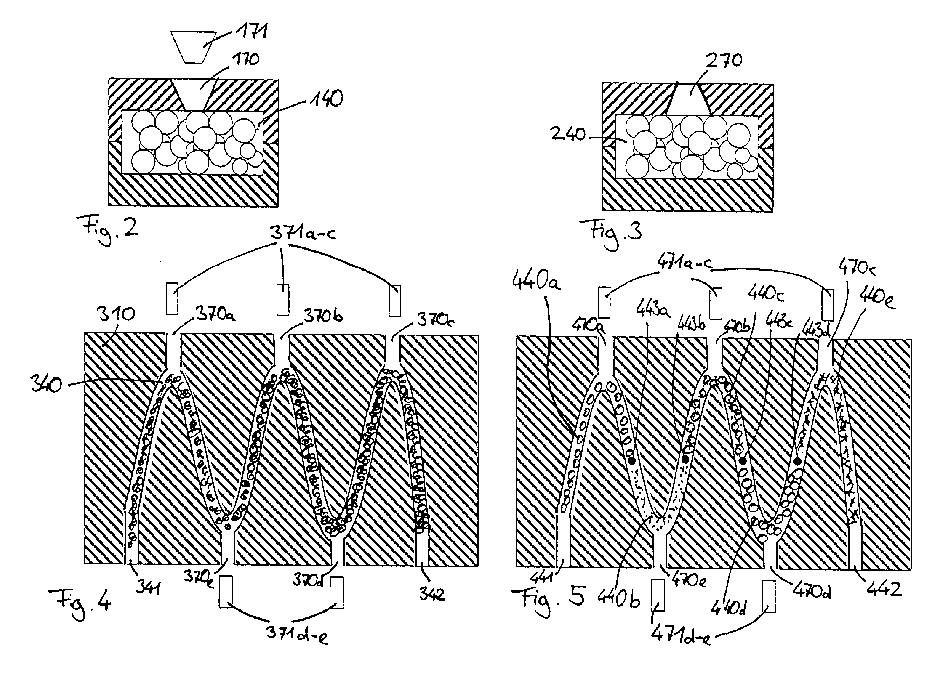

Fig. 3 zeigt eine dritte Ausführungsform der Probensammelkammer gemäß Fig. 1a-c und unterscheidet sich wiederum von dieser nur in der Geometrie des Fertigungshilfskanals und des Verschlussstopfens.

Der Fertigungshilfskanal 270 der dritten Ausführungsform gemäß Fig. 3 verjüngt sich konisch von innen nach außen. Das Einbringen eines Verschlussstopfens in den Fertigungshilfskanal 270 erfordert daher spezifische technologische Maßnahmen, die beispielsweise in der Verwendung eines mehrteiligen Verschlussstopfens liegen können in der Verwendung eines flüssigen Verschlussmaterials, welches nach Einbringen in den Fertigungshilfskanal 270 aushärtet und einen Verschlussstopfen ausbildet, der in der Verwendung eines Verschlussstopfens, der vor dem Bonding der beiden Substrate 210,220 in dem Hohlraum 240 platziert wurde und von innen in den Fertigungshilfskanal eingeführt wird.

Der solcherart ausgebildete Verschlussstopfen weist den Vorteil auf, dass er unter einem im Hohlraum 40 herrschende Innendruck gegen die Wandung des Fertigungshilfskanals 271 gepresst wird und hierdurch die Abdichtung des Fertigungshilfskanals verstärkt.

Fig. 4 zeigt ein zweites Beispiel eines mikrotechnologischen Bauteils in Gestalt einer gepackten Trennsäule. Die Trennsäule ist als mäanderförmiger Hohlraum 340 in ein Substrat 310 eingeätzt. Die Dünnschichttrennsäule wird, in analoger Weise wie die Probensammelkammer gemäß Fig. 1 a-c durch Aufeinanderbonden zweier solcher Substrate ausgebildet, wobei die jeweils in die Substrate eingeätzten mäanderförmigen Kanäle sich zu einem allseits umschlossenen Kanal zusammenfügen.

Der mäanderförmige Kanal oder Hohlraum 340 weist wiederum eine Einlassöffnung 341 und eine Auslassöffnung 342 auf, durch die ein Gas die gepackte Trennsäule durchströmen kann. In den jeweils zu den Substraträndern nächstliegenden Mäanderwindungen sind Fertigungshilfskanäle 370a,b,c,d,e angeordnet, die durch entsprechende Verschlussstopfen 371a,b,c,d,e verschlossen werden können. Die Fertigungshilfskanäle 370a-e dienen dazu, ein Trägermaterial 360 mit daran anhaftendem Adsorbens in den mäanderförmigen Hohlraum 340 einzubringen, nachdem die beiden Substrathälften aufeinandergebondet sind. Die Fertigungshilfskanäle 370a-e und die entsprechenden Verschlusstopfen 371a-e können gemäß der zu den Fig. 1-3 beschriebenen Technologie der Verschlussstopfen 70,71,170,171 und 270 ausgebildet werden.

Fig. 5 zeigt eine fünfte Ausführungsform, welche, ebenso wie Fig. 4, als Trennsäule für einen mikrotechnologischen Gaschromatographen eingesetzt werden kann. Die Trennsäule gemäß Fig. 5 ähnelt hinsichtlich der Säulengeometrie des meanderförmigen Hohlraums 440 und der Anordnung der Fertigungshilfskanäle 470a,b,c,d,e der vierten Ausführungsform gemäß Fig. 4. Die Trennsäule gemäß Fig. 5 unterscheidet sich jedoch von derjenigen gemäß Fig. 4 darin, dass der Hohlraum 440 in fünf getrennte Funktionsabschnitte 440a-e unterteilt ist. Die Funktionsabschnitte 440a-e liegen in Strömungsrichtung in Serie, so dass das durch die Einlassöffnung 441 einströmende Fluid die Funktionsabschnitte 440a-e nacheinander durchströmt, d.h., nachdem es den Funktionsabschnitt 440a durchströmt hat, tritt es in den Funktionsabschnitt 440b ein u.s.w. bis es nach Durchlauf des Funktionsabschnitts 440e zur Auslassöffnung 442 gelangt.

Die Funktionsabschnitte 440a-e sind jeweils durch gleichartige Trennstrukturen 443a-d voneinander getrennt. Eine Trennstruktur 443a-d wird durch mehrere Stege gebildet (in Fig. 5 symbolisch durch einen einzelnen, im quergeschnittenen Steg dargestellt). Die Stege sind solcherart bemessen und voneinander beabstandet, dass ein funktionelles Material, welches in den Funktionsabschnitten 440a-e angeordnet ist, die Trennstruktur 443a-d nicht passieren kann, dass jedoch ein Fluid, welches durch den Hohlraum 440 strömt, die Trennstrukturen 443a-d passieren kann.

Mit der Ausführungsform gemäß Fig. 5 wird ermöglicht, in den fünf Funktionsabschnitten 440a-e unterschiedliche Adsorbermaterialien zu platzieren, um unterschiedliche Bestandteile des Fluids, beispielsweise leichtflüchtige und schwerflüchtige Bestandteile, bei serieller Durchströmung der funktionellen Abschnitte 440a-e vorübergehend zu binden und folglich eine differenzierte Aufschlüsselung des Fluidstroms nach seinen unterschiedlichen Bestandteilen zu ermöglichen.

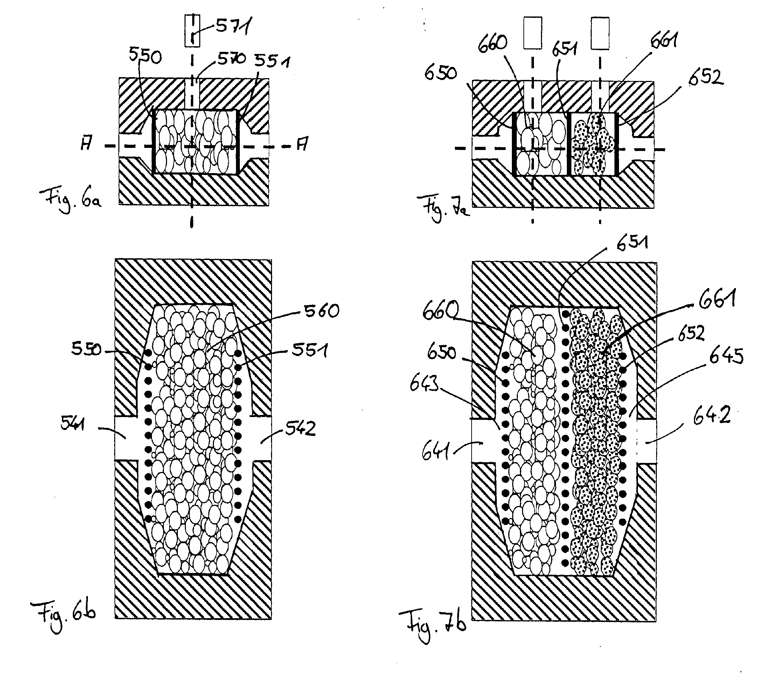

Die Fig. 6a,b zeigen eine sechste Ausführungsform der Probenanreicherungskammer. Die Probenanreicherungskammer gem. dieser sechsten Ausführungsform ist in Strömungsrichtung, d.h. in Verbindung einer Einlassöffnung 541 und einer Auslassöffnung 542 kürzer bemessen als quer dazu. Durch diese Geometrie wird für das die Probensammelkammer durchströmende Fluid ein großer Querschnitt bereitgestellt und hierdurch auch bei geringer Länge der Probensammelkammer aufgrund der großen Breite eine hohe Beladungskapazität für ein Adsorbens 560 erzielt. Wie zuvor beschrieben, wird ein das Adsorbens aufnehmender Probenanreicherungsabschnitt mittels Trennstrukturen 550,551 von einem Einlass- bzw. Auslassabschnitt getrennt. Besonders vorteilhaft an der in den Fig. 6a,b gezeigten Probensammelkammergeometrie ist, dass eine Komponententrennung aufgrund der Kürze der Strömungsdistanz innerhalb der Probensammelkammer vermieden wird und folglich die in der Probensammelkammer absorbierten Bestandteile des Fluids als kompakter Block aus der Probensammelkammer wieder abgeführt werden kann.

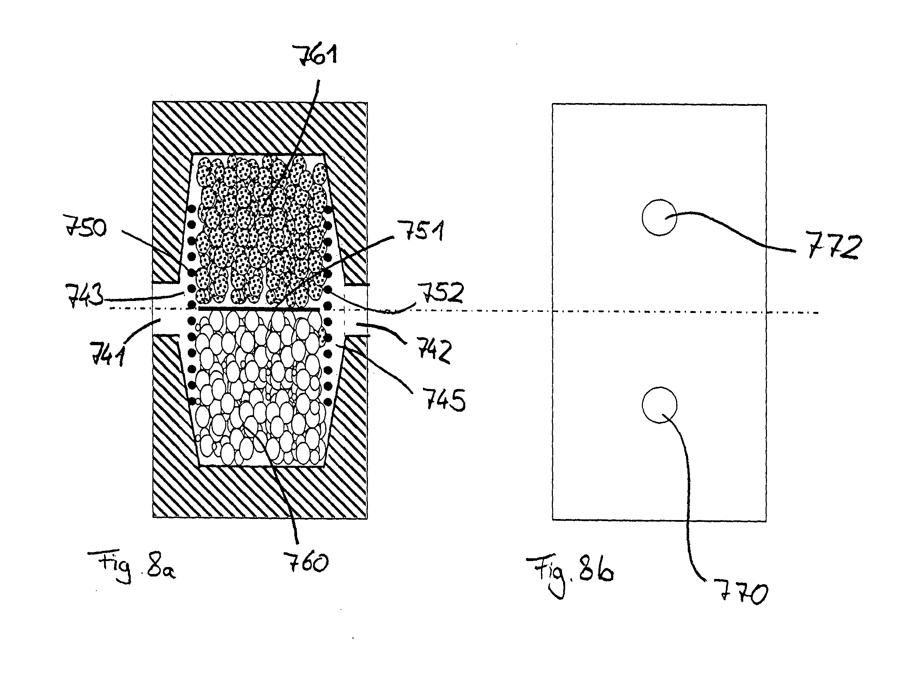

Die Fig. 7a,b zeigen eine Fortbildung der Ausführungsform gem. Fig. 6a,b. Die in den Fig. 7a,b gezeigte Probenanreicherungskammer weist eine Einlassöffnung 641 und eine Auslassöffnung 642 auf. Hinter der Einlassöffnung 641 ist ein Einlassabschnitt 643 angeordnet, der von einer ersten Packung eines Adsorbermaterials 660 durch eine Trennstruktur 650 getrennt ist. Die Trennstruktur 650 wird durch eine Vielzahl von Stegen gebildet, die so bemessen und voneinander beabstandet sind, dass das Adsorbermaterial 660 nicht in den Einlassabschnitt 643 gelangen kann, wohl aber das durch die Einlassöffnung 641 strömende Fluid zwischen den Stegen hindurch in die Packung des Adsorbermaterials 660 strömen kann.

Weiterhin ist in Strömungsrichtung hinter dem Adsorbermaterial 660 in der Probenanreicherungskammer ein zweites Adsorbermaterial 661 angeordnet. Das zweite Adsorbermaterial 661 ist von dem ersten Adsorbermaterial 660 durch eine Trennstruktur 651 getrennt, die wiederum aus einer Vielzahl von Stegen gebildet wird, die so bemessen und beabstandet sind, dass weder das Adsorbermaterial 660 noch das Adsorbermaterial 661 die Trennstruktur durchdringen kann, dass aber das die Probenanreicherungskammer durchströmende Fluid durch diese Trennstruktur hindurchströmen kann.

Die zweite Packung Adsorbermaterial 661 wird von der Auslassöffnung 642 wiederum durch eine weitere Trennstruktur 652 abgetrennt, wodurch zwischen der zweiten Packung Adsorbermaterial 661 und der Auslassöffnung 642 ein Auslassabschnitt 645 gebildet wird, in dem kein Adsorbermaterial angeordnet ist, wie im Einlassabschnitt 643.

Die Probenanreicherungskammer gemäß den Fig. 7a,b stellt daher eine strömungstechnisch serielle Anordnung zweier unterschiedlicher Adsorbermaterialien bereit und ermöglicht daher die temporäre Speicherung unterschiedlicher Bestandteile des Fluids in den unterschiedlichen Adsorbermaterialien. Durch die Geometrie und die serielle Anordnung wird eine kompakte Abgabe des Adsorbermaterials aus der Probenanreicherungskammer ermöglicht.

Wie in Fig. 7a zu erkennen, ist ein erster Fertigungshilfskanal 670 in das obenliegende Substrat eingearbeitet, der mit einem Verschlussstopfen 671 verschlossen werden kann, nachdem das Adsorbermaterial 660 in den Hohlraum zwischen den beiden Trennstrukturen 650,651 eingefüllt worden ist.

Ein zweiter Fertigungshilfskanal 672, der mit einem entsprechenden Verschlussstopfen 673 verschlossen werden kann, ist zusätzlich bereitgestellt, um das Adsorbermaterial 661 in den Hohlraum zwischen den Trennstrukturen 651,652 einfüllen zu können. Die Fertigungshilfskanäle 670,672 und die hierzu passenden Verschlussstopfen 671,673 können gemäß den vorherigen Ausführungen ausgestaltet werden.

Die Fig. 8a,b zeigen eine alternative Fortbildung der Ausführungsform gemäß Fig. 6a,b. Die in den Fig. 8a,b gezeigte Probenanreicherungskammer weist eine Einlassöffnung 741 und eine Auslassöffnung 742 auf. Hinter der Einlassöffnung 741 ist ein Einlassabschnitt 743 angeordnet. Der Einlassabschnitt mündet direkt in einen ersten, mit Adsorbermaterial gefüllten Probenanreicherungsabschnitt 760 und einen strömungstechnisch parallel hierzu angeordneten zweiten, mit einem unterschiedlichen Adsorbermaterial gefüllten Probenanreicherungsabschnitt 761.

Der erste und zweite Probenanreicherungsabschnitt 760, 761 sind vom Einlassabschnitt 743 durch eine Trennstruktur 750 getrennt ist. Die Trennstruktur 750 wird durch eine Vielzahl von Stegen gebildet, die so bemessen und voneinander beabstandet sind, dass weder das im Probenanreicherungsabschnitt 760 noch das im Probenanreicherungsabschnitt 761 angeordnete Adsorbermaterial in den Einlassabschnitt 643 gelangen kann, wohl aber das durch die Einlassöffnung 641 strömende Fluid zwischen den Stegen hindurch in die Probenanreicherungsabschnitte 760, 761 strömen kann.

Der erste Probenanreicherungsabschnitt 760 ist von dem zweiten Probenanreicherungsabschnitt 761 durch eine Trennstruktur 751 getrennt, die aus einer durchgehenden Wand gebildet wird, so dass weder das Adsorbermaterial 760 noch das Adsorbermaterial 761 noch das Probenmaterial die Trennstruktur 751 durchdringen kann.

Der erste Probenanreicherungsabschnitt 760 und der zweite Probenanreicherungsabschnitt 761 grenzen an dem der Trennstruktur 750 gegenüberliegenden Ende wiederum an eine Trennstruktur 752, welche die beiden Probenanreicherungsabschnitten 760, 761 von einem Auslassabschnitt 745 trennt. Im Auslassabschnitt 745 ist kein Adsorbermaterial angeordnet. Auf diese Weise kann das Probenmaterial aus der Einlassöffnung 741 durch die Trennstruktur 750 direkt in beide Probenanreicherungsabschnitte 760, 761 eintreten und aus den beiden Probenanreicherungsabschnitte 760, 761 durch die Trennstruktur 752 direkt in die Auslassöffnung 642 eintreten.

Die Probenanreicherungskammer gem. den Fig. 8a,b stellt daher strömungstechnisch eine Parallelanordnung zweier unterschiedlicher Adsorbermaterialien bereit und ermöglicht hierdurch die temporäre Speicherung unterschiedlicher Bestandteile des Probenmaterials in den unterschiedlichen Adsorbermaterialien.

Durch die Geometrie und die parallele Anordnung wird eine Abgabe der adsorbierenden Bestandteile des Probenmaterials aus der Probenanreicherungskammer ermöglicht ohne dass hierbei ein Zeitversatz beziehungsweise Abstand zwischen den in den beiden Probenanreicherungsabschnitten gespeicherten Bestandteile des Probenmaterials auftritt.

Wie in Fig. 8b zu erkennen, ist ein erster Fertigungshilfskanal 770 in das obenliegende Substrat eingearbeitet, der mit einem Verschlussstopfen verschlossen werden kann, nachdem das Adsorbermaterial in den Probenanreicherungsabschnitt 760 eingefüllt worden ist.

Ein zweiter Fertigungshilfskanal 772, der mit einem entsprechenden Verschlussstopfen verschlossen werden kann, ist zusätzlich bereitgestellt, um das Adsorbermaterial in den Probenanreicherungsabschnitt 761 einfüllen zu können. Die Fertigungshilfskanäle 770,772 und die hierzu passenden Verschlussstopfen können gemäß den vorherigen Ausführungen ausgestaltet werden.

## Patentansprüche

1. Mikrotechnologisches Bauteil, umfassend
- einen allseits von einer Wandung begrenzten und in einem Substrat oder mehreren miteinander verbunden Substraten ausgebildeten Hohlraum (40),
- zumindest einen Kanal (41;42), der in den Hohlraum mündet zur Zufuhr oder Abfuhr eines Fluids,
- ein innerhalb des Hohlraums dauerhaft angeordnetes funktionelles Material (60), und
- einen in zumindest einem Substrat ausgebildeten, in den Hohlraum mündenden und im Gebrauchszustand des Bauteils verschlossenen Fertigungshilfskanal (70;170;270;370) zur Zuführung des funktionellen Materials (60) während des Herstellungsvorgangs des Bauteils,
**dadurch gekennzeichnet, dass** der Fertigungshilfskanal mittels eines Verschlussstopfens (71;171;371a-e) verschlossen ist und der Verschlussstopfen aus einem Material besteht, welches einen Wärmeausdehnungskoeffizienten aufweist, der nur geringfügig von dem Wärmeausdehnungskoeffizienten des Materials des Substrats (10), in dem der Fertigungshilfskanal ausgebildet ist, abweicht.

2. Analysevorrichtung nach Anspruch 1,
**dadurch gekennzeichnet, dass** der Wärmeausdehnungskoeffizient des Materials des Verschlussstopfens mit dem Wärmeausdehnungskoeffizienten des Materials des Substrats, in dem der Fertigungshilfskanal ausgebildet ist, übereinstimmt.

3. Bauteil nach Anspruch 1 oder 2,
**dadurch gekennzeichnet, dass** der Verschlussstopfen aus dem gleichen Material ausgebildet ist wie das Substrat, in dem der Fertigungshilfskanal ausgebildet ist.

4. Bauteil nach einem der vorhergehenden Ansprüche,
**dadurch gekennzeichnet, dass** der Hohlraum
- einen Einlassabschnitt (43), der sich im Strömungsquerschnitt erweitert,
- einen Funktionsabschnitt (44), der sich in Strömungsrichtung an den Einlassabschnitt anschließt, und
- einen Auslassabschnitt (45), der sich in Strömungsrichtung an den Funktionsabschnitt anschließt und im Strömungsquerschnitt verringert,
umfasst.

5. Bauteil nach dem vorhergehenden Anspruch,
**dadurch gekennzeichnet, dass** der Einlassabschnitt und/oder Auslassabschnitt von dem Funktionsabschnitt mittels einer Trennstruktur (50a-c;51 a-c) abgetrennt ist, welche für das Fluid durchlässig und für das funktionelle Material undurchlässig ist.

6. Bauteil nach einem der beiden vorhergehenden Ansprüche,
**dadurch gekennzeichnet, dass** nur im Funktionsabschnitt (44) funktionelles Material (60) angeordnet ist.

7. Bauteil nach einem der vorhergehenden Ansprüche,
**gekennzeichnet durch** mehrere separierte Funktionsbereiche (660, 661) mit unterschiedlichen funktionellen Materialien, welche in Durchströmungsrichtung in Serie liegend angeordnet sind und zwischen denen eine Trennstruktur bereitgestellt ist, welche für das Fluid durchlässig und für die funktionellen Materialien undurchlässig ist.

8. Bauteil nach einem der vorhergehenden Ansprüche,
**gekennzeichnet durch** mehrere separierte Funktionsbereiche (760, 761) mit unterschiedlichen funktionellen Materialien, welche in Durchströmungsrichtung parallel liegend angeordnet sind und zwischen denen eine Trennstruktur (751) bereitgestellt ist, welche für die funktionellen Materialien und vorzugsweise auch für das Fluid undurchlässig ist.

9. Bauteil nach dem vorhergehenden Anspruch,
**dadurch gekennzeichnet, dass** jeder Funktionsbereich einen eigenen Fertigungshilfskanal aufweist.

10. Bauteil nach einem der vorhergehenden Ansprüche 5-9,
**dadurch gekennzeichnet, dass** die Trennstruktur mehrere voneinander beabstandete Stege umfasst.

11. Bauteil nach einem der vorhergehenden Ansprüche 4-10,
**dadurch gekennzeichnet, dass** sich der Fertigungshilfskanal (70;170;270;370a-e) senkrecht zur Durchströmungsrichtung des Funktionsabschnitts erstreckt.

12. Bauteil nach einem der vorhergehenden Ansprüche,
**dadurch gekennzeichnet, dass** sich der Fertigungshilfskanal (170) von außen nach innen zum Hohlraum konisch verjüngt und der Verschlussstopfen (171) kongruent hierzu ausgeformt ist und klemmend und/oder mittels eines Klebstoffes in dem Fertigungshilfskanal befestigt ist.

13. Bauteil nach einem der vorhergehenden Ansprüche oder dem Oberbegriff von Anspruch 1,
**dadurch gekennzeichnet, dass** sich der Fertigungshilfskanal (270) von innen nach außen vom Hohlraum weg konisch verjüngt.

14. Bauteil nach einem der vorhergehenden Ansprüche,
**dadurch gekennzeichnet, dass** der Verschlussstopfen aus einem aushärtbaren Material besteht, welches in einem formbaren oder fließfähigen Zustand in den Fertigungshilfskanal eingeführt werden kann und hierauffolgend ausgehärtet werden kann.

15. Verfahren zum Herstellen eines mikrotechnologischen Bauteils, mit den aufeinanderfolgenden Schritten
- Ausbilden eines allseits von einer Wandung begrenzten Hohlraums (40) in einem Substrat (10) oder mehreren miteinander verbunden Substraten (10,20),
- Ausbilden zumindest eines Kanals (41;42), der in den Hohlraum mündet zur Zufuhr oder Abfuhr eines Fluids,
- Einführen eines funktionellen Materials (60) in den Hohlraum (40) durch einen in dem Substrat ausgebildeten, in den Hohlraum mündenden Fertigungshilfskanal (70), und
- Verschließen des Fertigungshilfskanals,
**dadurch gekennzeichnet, dass** der Fertigungshilfskanal mittels eines Materials (71) verschlossen wird, welches einen Wärmeausdehnungskoeffizienten aufweist, der nur geringfügig von dem Wärmeausdehnungskoeffizienten des Materials des Substrats, in dem der Fertigungshilfskanal ausgebildet ist, abweicht.

16. Verfahren nach Anspruch 15,
**dadurch gekennzeichnet, dass** der Fertigungshilfskanal mittels eines Materials verschlossen wird, welches einen Wärmeausdehnungskoeffizienten aufweist, der identisch ist zu dem Wärmeausdehnungskoeffizienten des Materials des Substrats, in dem der Fertigungshilfskanal ausgebildet ist.

17. Verfahren nach Anspruch 15 oder 16,
**dadurch gekennzeichnet, dass** der Fertigungshilfskanal mittels eines Verschlussstopfens (71,171,371a-e) aus einem festen Material verschlossen wird, welcher reibschlüssig und/oder stoffschlüssig im Fertigungshilfskanal befestigt wird.

18. Verfahren nach einem der vorhergehenden Ansprüche 15 bis 17,
**dadurch gekennzeichnet, dass** der Fertigungshilfskanal verschlossen wird, indem ein im Hohlraum angeordneter Verschlusstopfen von innen in den Fertigungshilfskanal eingeführt wird.

19. Verfahren nach einem der vorhergehenden Ansprüche 15 bis 18,
**dadurch gekennzeichnet, dass** der Fertigungshilfskanal verschlossen wird, indem ein flüssiges Material in den Fertigungshilfskanal eingeführt und darin ausgehärtet wird.
